Europäisches Patentamt

European Patent Office

Office européen des brevets

(11) Veröffentlichungsnummer: **0 119 376**
**B1**

(12) # EUROPÄISCHE PATENTSCHRIFT

(45) Veröffentlichungstag der Patentschrift:
13.08.86

(51) Int. Cl.⁴: **F 16 B 7/04, E 04 B 2/74**

(21) Anmeldenummer: 84100023.5

(22) Anmeldetag: 03.01.84

(54) Anordnung zum Verbinden von zwei Profilschienen.

(30) Priorität: 19.03.83 DE 3310005

(43) Veröffentlichungstag der Anmeldung:
26.09.84 Patentblatt 84/39

(45) Bekanntmachung des Hinweises auf die Patenterteilung:
13.08.86 Patentblatt 86/33

(84) Benannte Vertragsstaaten:
AT BE CH DE FR GB IT LI NL SE

(56) Entgegenhaltungen:
EP-A-0 011 992
DE-A-2 812 502
FR-A-2 273 966
US-A-4 021 129

(73) Patentinhaber: Baus, Heinz Georg,
Wartbodenstrasse 35, CH- 3626 Hünibach- Thun
(CH)

(72) Erfinder: Baus, Heinz Georg, Wartbodenstrasse 35,
CH- 3626 Hünibach- Thun (CH)

(74) Vertreter: Klose, Hans, Dipl.- Phys.,
Kurfürstenstrasse 32, D-6700 Ludwigshafen (DE)

LIBER, STOCKHOLM 1986

## Beschreibung

Die Erfindung bezieht sich auf eine Anordnung zum Verbinden von zwei Profilschienen, insbesondere einer Duschtrennwand, wobei die erste Profilschiene eine sich über die gesamte Länge erstreckende Öffnung sowie einen Innenraum aufweist. In dem Innenraum ist ein Klemmkörper mit einem Gewinde für eine Schraube angeordnet, wobei durch Anziehen dieser Schraube die zweite Profilschiene bezüglich der ersten Profilschiene festsetzbar ist.

In der US-A-4 021 129 ist eine Anordnung zum Verbinden von Profilschienen beschrieben, bei welcher ein Innenraum und die sich in Längsrichtung erstreckende Öffnung der ersten Profilschiene eine hinterschnittene Längsnut bilden. Der Klemmkörper muß von der Stirnseite der Profilschiene in die besagte Längsnut eingeschoben werden. Ein Winkelstück ist mit der zweiten Profilschiene mittels Schrauben verbunden und in einem Hohlraum derselben angeordnet. Ferner sind der Klemmkörper und das Winkelstück mittels Schrauben miteinander verbunden. Die Profilschienen liegen mit ihren Augenflächen stumpf aneinander an. Die Herstellung einer Verbindung erfordert einen nicht unerheblichen Arbeitsaufwand, da die einzelnen Bestandteile sukzessive nacheinander eingesetzt und miteinander verschraubt werden müssen. Eine nachträgliche gegenseitige Ausrichtung der Profilschienen ist mit einem erheblichen Aufwand verbunden, da praktisch die gesamte Anordnung zunächst auseinandergebaut werden muß.

In der DE-A-2 556 396 ist ein Verbindungsstück für Möbelteile beschrieben, welches als ein Hohlkörper ausgebildet ist und Kammern zur Aufnahme von Muttern für Schraubem aufweist. Das Verbindumgsstück wird aus zwei Teilen gefertigt, wobei vor den Zusammenbau die Muttern im die gemannten Kammern eingesetzt werden. Die mit dem Verbindungsstück zu verbindenden Möbelteile sind mit Ausnehmungen versehen, in welche die genannten Schrauben einzusetzem sind. Das Verbindungsstück und die Möbelteile weisen einamder zugeordnete Bohrungen für die Schrauben auf. Die Möbelteile und das Verbindungsstück weisen eine definierte Ausrichtung zueinander auf, wobei ein nachträgliches Verändern oder Justieren nicht durchführbar ist.

Ferner ist aus der DE-A-1 654 766 ein Gestell- oder Kasten skelett beschrieben, dessen Profilstange mit einem besonderen Winkelstück sowie Schrauben und Muttern bzw. Klemmkörpern miteinander verbunden sind. Das Winkelstück und die Profilstangen weisen einander zugeordnete Bohrungen auf, durch welche die Schrauben hindurchgeführt sind. Sind einmal die Bohrungen in die Profilstangen eingebracht worden, so ist ein nachträgliches Verschieben oder Ausrichten der Profilstangen nur noch möglich, wenn neue Bohrungen in den Profilstangem vorgesehen werden.

Sollen Profilschienen miteinander verbunden werden, so besteht heute mehr denn je die Forderung nach einer eirfachen und funktionsgerechten Handhabung. Dies gilt besonders bei sogenannten Verlängerungs- oder Ausgleichprofilen, welche beim Einbau eines Gegenstandes, genannt seien hier Duschtrennwände, Penster- oder Türrahmen zwecks Ausgleich von bauseitsbedingten Toleranzen vorgesehen werden müssen. Bisher begnügte man sich damit, mittels einer Bohrmaschine in wenigstens eine der zu verbindenden Profilschienen nachträglich an die gewünschte Stelle eine Bohrung einzubringen und nachfolgend mittels einer Schraube oder dergleichen die Verbindung herzustellen. In der Praxis ergeben sich hierbei zum Teil nicht unbeträchtliche Schwierigkeiten, zumal eine spanabhebende Bearbeitung (Bohren, Sägen, Feilen...) bei der Montage zeit- und kostenaufwendig ist. Ferner kann beispielsweise durch falsches Bohren oder Abrutschen eines Bohrers die Profilschiene insgesamt beschädigt werden. Gegebenenfalls muß die günstigste Stellung nach mehrmaligem Versuchen durch den Monteur erst herausgefunden werden. Hierdurch wird ein nicht unerheblicher zusätzlicher Arbeitsaufwand verursacht.

Der Erfindung liegt daher die Aufgabe zugrunde, mit einem geringen Aufwand eine Anordnung der genannten Art vorzuschlagen, welche eine schnelle und zuverlässige Verbindung von zwei Profilschienen ermöglicht, wobei deren gegenseitige Ausrichtung zunächst noch variabel ist. Die Verbindung soll ohne zusätzliche Werkzeuge und insbesondere ohne den Einsatz spanabhebender Werkzeuge leicht durchführbar sein und dennoch eine funktionsgerechte und dauerhafte Verbindung der Profilschienen sicherstellen. Bei Bedarf sollen die Profilschienen in der gewünschten Weise gegeneinander ausgerichtet und auch in ihrer geometrischen Lage verändert werden, um danach fest miteinander verbunden zu werden. Die Anordnung soll hohen Sicherheitsanforderungen entsprechen und den betrieblichen Anforderungen und Gegebenheiten gewachsen sein. Die Handhabung und die Montage der Profilschienen soll ferner erleichtert werden.

Zur Lösung dieser Aufgabe wird vorgeschlagen, daß der Klemmkörper von der Seite her, quer zur Längsrichtung der ersten Profilschiene durch die Öffnung in den Innenraum einsetzbar ist, wobei die zweite Profilschiene mit einem Schenkel durch diese Öffnung hindurch in den Innenraum der ersten Profilschiene eingreift. Der genannte Schenkel ist in eimem Spalt eingeklemmt, welcher zwischen einer Auflagefläche des Klemmkörpers umd einem Steg der ersten Profilschiene und/oder einem Stützkörper vorhanden ist.

Die erfindungsgemäße Anordnung ermöglicht in besonders einfacher und kostengünstiger Weise eine schnelle und dennoch zuverlässige Verbindung von zwei Profilschienen. Mittels des erfindungsgemäß vorgeschlagenen Klemmkörpers wird der Schenkel der zweiten Profilschiene bezüglich des Steges der ersten Profilschiene festgeklemmt. Die geometrische Ausrichtung der beiden Profilschienen zueinander kann durch entsprechend tiefes oder auch weniger tiefes Einschieben des Schenkels in den Spalt mehr oder weniger stark variiert und den jeweilen Bandbedingungen entsprechend vorgegeben werden. Dies ist vor allem im Zusammemhang mit sogenannten Verlängerungs- und Ausgleichsprofilschienen von maßgebender Bedeutung, zumal bauseits keine spanabhebende Bearbeitung der Profilschienen vorgesehen werden muß. Die Verbindung ist bei der Herstellung werksseitig vorbereitet worden. Bei der Montage müssen lediglich die beiden Profilschienen in der erforderlichen Weise ineinander geschoben und gegeneinander ausgerichtet werden, wobei nachfolgend lediglich durch Anziehen der Schrauben die feste Verbindung hergestellt wird. Von maßgebender Bedeutung ist hierbei, daß die Profilschienen zunächst vorläufig ausgerichtet und montiert werden können, wobei eine spanabhebende Bearbeitung nicht erforderlich ist. Durch ein erstes, in der Regel noch nicht allzu festes Anziehen der Schraube wird eine vorläufige Fixierung und Ausrichtung erreicht. Gegebenenfalls kann diese Ausrichtung durch Lösen der Schraube wieder verändert werden, um dann durch festes Anziehen der Schraube die endgültige Position zu fixieren. Der Klemmkörper weist erfindungsgemäß eine hinreichend große Klemmfläche auf, um eine Beschädigung der Profilschienen zu vermeiden. Um einen einfachen Zusammenbau der Profilschienen zu ermöglichen, sind die Profilschienen derart ausgebildet, daß die zweite Profilschiene mit ihrem Schenkel von der Seite her in die erste Profilschiene einschiebbar ist, wobei die Einschubtiefe vorwählbar ist. Handelt es sich beispielsweise um in vertikaler Richtung anzuordnende Profilschienen, so ist die zweite Profilschiene in horizontaler Richtung von der Seite in die erste Profilschiene einzuschieben; dies ist auch bei beengten Raumverhältnissen ohne weiteres durchführbar. Die Einschubtiefe kann hierbei den jeweiligen Anforderungen entsprechend vorgewählt werden, um insbesondere bauseits bedingte Ungenauigkeiten ausgleichen zu können.

In einer besonderen Ausgestaltung weist der Schenkel der zweiten Profilschiene einen zumindest näherungsweise quer zur Längsachse verlaufenden Schlitz auf. Dieser Schlitz wird von der Schraube und/oder dem Klemmkörper durchdrungen. Die zweite Profilschiene kann somit den jeweiligen Erfordernissen entsprechend in die erste Profilschiene eingeschoben werden, ohne daß diese Bewegung durch die Schraube oder den Klemmkörper in irgendeiner Weise eingeschränkt wird. Erfindungsgemäß übergreift der Klemmkörper diesen Schlitz und der Klemmkörper mug daher im wesentlichen Zugoder Druckkräfte aufnehmen.

In einer zweckmäßigen Ausgestaltung besteht der Klemmkörper insbesondere aus einem mit Glasfasern verstärkten Kunststoff, in welchen die Mutter oder die Gewindehülse beim Herstellen, insbesondere nach einem Spritzverfahren, eingebettet ist. Mutter oder Gewindehülse sind integrale Bestandteile des Klemmkörpers, und der Klemmkörper kann mit einem geringen Kostenaufwand in der jeweils gewünschten Form gefertigt werden. Es sei ausdrücklich hervorgehoben, dag im Rahmen der Erfindung der Klemmkörper und auch die Gewindehülse und/oder das Innengewinde aus ein und demselben Material bestehen können und einstückig ausgebildet sind. Dies gilt sowohl für Kunststoff als auch für ein anderes Material, insbesondere Metall. Der Klemmkörper kann insbesondere auch aus einem metallischen Druckgußteil bestehen, in welchem das Innengewinde unmittelbar vorgesehen ist. Das Einbetten der Gewindehülse hat sich jedoch im Hinblick auf die Herstellungskosten als besonders kostengünstig erwiesen.

In einer besonderen Ausführungsform ist der Klemmkörper im wesentlichen plattenförmig ausgebildet und er weist ferner auf seiner dem Steg der Profilschiene abgewandten Oberfläche einen Ansatz und/oder Versteifungsrippen für die Gewindehülse auf. Mit geringem Materialeinsatz ist ein funktionsgerechter, platz- und gewichtssparender Klemmkörper geschaffen.

In einer alternativen Ausführungsform weist der Klemmkörper einen dem Steg der Profilschiene zugewandten Zapfen auf, welcher den Stützkörper durchdringt und welcher die Gewindehülse und/oder das Innengewinde enthält. Bei dieser Ausführungsform ist der Klemmspalt aufgrund des dazwischenliegenden Stützkörpers in einem vorgegebenen Abstand angeordnet. Der Schenkel der zweiten Profilschiene wird somit mittelbar über den Stützkörper bezüglich der ersten Profilschiene verspannt bzw. eineklemmt. Die Breite des Stützkörpers kann den jeweiligen Anforderungen entsprechend vorgegeben werden.

Um eine einfache und sichere Befestigung von Stützkörper einerseits und erster Profilschiene andererseits an einer Wand oder sonstigen Profilschiene zu ermöglichen, weist der Stützkörper eine Querbohrung auf, welche mit einer Bohrung des Steges der ersten Profilschiene fluchtet und durch welche eine Befestigungsschraube hindurchführbar ist. Bereits bei der Herstellung der Profilschiene sowie des Stützkörpers sind somit die notwendigen Vorbereitungen getroffen worden, damit eine Montage und Befestigung der Profilschiene lediglich die Befestigungsschraube durch die genannte Querbohrung sowie die genannte Bohrung des Steges hindurchzuführen ist und somit eine zusätzliche Bearbeitung während der Montage entfällt.

In einer besonders zweckmäßigen Ausgestaltung weist der Stützkörper eine Bohrung mit Innengewinde auf, in welche eine Verstellschraube für ein Rahmenprofil oder dergleichen eingreift. Die Verstellschraube steht in bekannter Weise mit dem Rahmenprofil oder dergleichen in Eingriff und durch drehen der Verstellschraube kann ohne weiteres der Abstand zum ersten Rahmenprofil verändert und eingestellt werden. Insoweit entfallen zusätzliche Bauteile.

In einer besonderen Ausführungsform weisen die beiden Stege der ersten Profilschiene zwischen den Augenflächen bzw. Innenflächen, an welchen die Schenkel anliegen, einen Abstand auf, welcher im wesentlichen gleichgroß ist wie der Abstand der entsprechenden anliegenden Flächen der Schenkel der zweited Profilschiene. Im Gegensatz zur bekanntgewordenen Ausführungsform, bei welcher die Schenkel die genannten Stege augenseitig umgreifen oder umkehrt, greifen die Stege bzw. Schenkel versetzt ineinander. Hierdurch wird in überraschend einfacher Weise eine große Variationsmöglichkeit hinsichtlich der weiteren Ausgestaltung der beiden Profilschienen sichergestellt.

Um eine schnelle und einfache Montage zu ermöglichen, liegt der Klemmkörper mit wenigstens einer Seitenfläche an der ersten Profilschiene zwecks Drehsicherung an. Hiermit ist zum einen sichergestellt, daß sich der Klemmkörper, beispielsweise während des Transportes, unzulässig löst und aus dem Innenraum herausfällt. Andererseits wird aufgrund der Anlage von Seitenfläche und Profilschiene ein unzulässiges Verdrehen des Klemmkörpers bei Anziehen der eingreifenden Schraube unterbunden. Ferner sind bei der Montage Werkzeuge zum Festhalten des Klemmkörpers nicht erforderlich.

Die Erfindung wird nachfolgend anhand der in der Zeichnung dargestellten Ausführungsbeispiele näher erläutert. Es zeigen:

Fig. 1 eine perspektivische Ansicht einer Duschtrennwand,

Fig. 2 einen Schnitt durch die vertikalen Profilschienen gemäß Fig. 1,

Fig. 3 eine perspektivische Darstellung eines Klemmkörpers und Stützkörpers zum Verbinden der Profilschienen gemäß Fig. 2,

Fig. 4 einen Schnitt ähnlich Fig. 2 mit einer geänderten zweiten Profilschiene,

Fig. 5 eine alternative Ausführungsform, bei welcher die erste Profilschiene als eine Eckprofilschiene ausgebildet ist,

Fig. 5a eine Aufsicht auf die zweite Profilschiene in Blickrichtung V gemäß Fig. 5,

Fig. 6 eine Aufsicht auf den Klemmkörper in Blickrichtung VI gemäß Fig. 5,

Fig. 7 eine Ausführungsform ähnlich Fig. 4, jedoch mit einer für eine Seitenwand ausgebildeten zweiten Profilschiene,

Fig. 8 die Ausführungsform gemäß Fig. 5 befestigt an einer Raumwand,

Fig. 9 die Ausführungsform gemäg Fig. 8, wobei hier das Rahmenprofil mittels einer Verstellschraube zur ersten Profilschiene in einen vorgegebenen Abstand gebracht ist.

Fig. 10 eine Kombination von zwei Ausführungsformen ähnlich Fig. 7,

Fig. 11 eine Kombination von Profilschienen, wobei sowohl ein plattenförmiger Klemmkörper als auch ein Klemmkörper in Verbindung mit einem Stützkörper zum Einsatz gelangen.

Fig. 12 eine Ausführungsform, welche für ein Frontprofil vorgesehen ist,

Fig. 13 eine Ausführungsform mit rechtwinklig zueinander angeordneten Profilschienen,

Fig. 14 eine Ausführungsform entsprechend Fig. 8, wobei hier noch ein Verbreiterungsprofil vorgesehen ist.

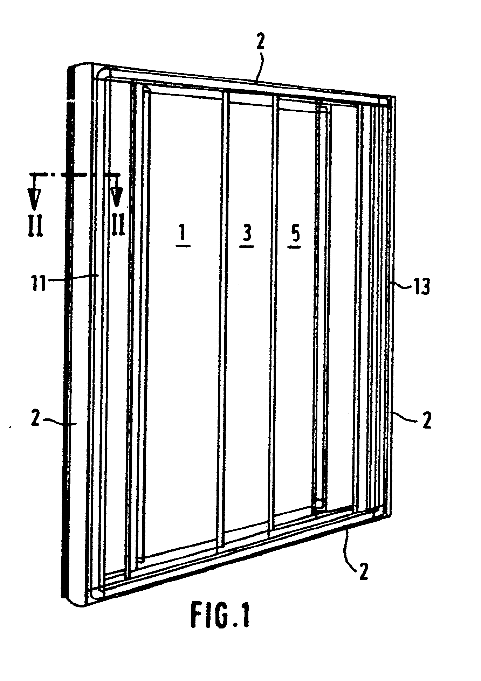

Fig. 1 zeigt schematisch eine Duschtrennwand, deren Rahmen aus vier rechtwinkelig angeordneten Profilschienen 2 aufgebaut ist. In der oberen horizontalen Profilschiene sind Türelemente 1, 3, 5 in horizontaler Richtung verschiebbar angeordnet. Die Trennwand wird im allgemeinen mit ihrer unteren horizontalen Profilschiene 2 auf den Rand einer Duschwanne aufgesetzt und die beiden vertikalen Profilschienen werden an einer Raumwand befestigt oder es werden weitere Trennnwände mit diesen Profilschienen verbunden. Die Profilschienen 2 sind an ihrer, einem Betrachter von außen, hier von rechts, sichtbaren Außenfläche 13 mit Verblendungsprofilen 11 versehen. Mit den ersten Profilschienen 2 sind nachfolgend noch zu erläuternde zweite Profilschienen in Form von Verlängerungs-, Ausgleichs- oder Verbindungsprofilen verbunden.

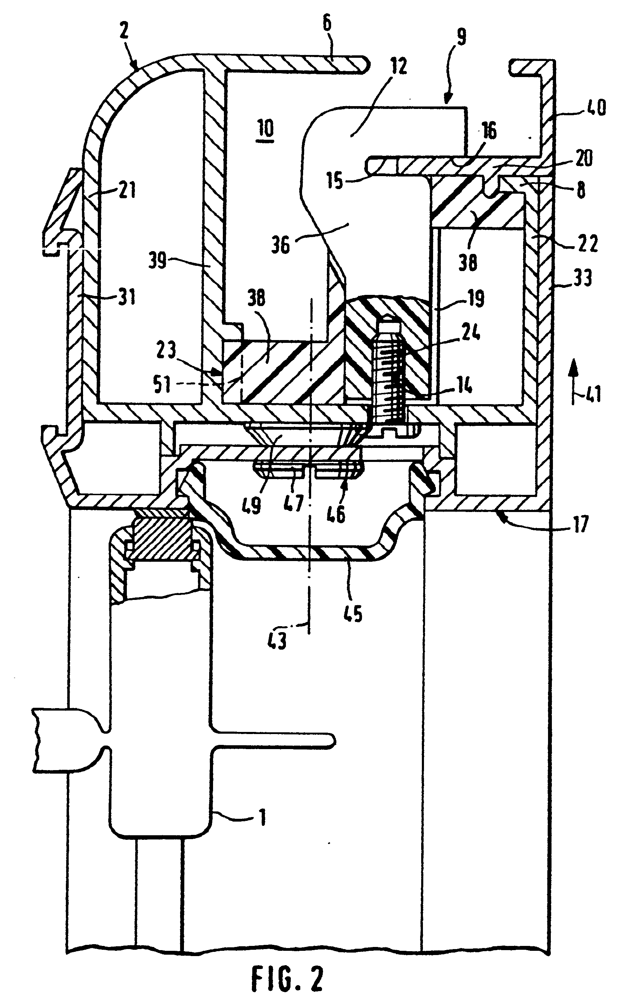

Fig. 2 zeigt einen Schnitt durch die vertikal angeordnete erste Profilschiene 2, mit welcher eine zweite Profilschiene 40 verbunden ist. Die erste Profilschiene 2 enthält zwei parallele Stege 6, 8, zwischen welchen eine Öffnung 9 vorhanden ist. Ferner ist ein Innenraum 10 vorhanden, der sich ebenso wie die Öffnung 9 senkrecht zur Zeichenebene über die Länge der Profilschiene 2 erstreckt. Im Innenraum 10 ist ein Klemmkörper 12 mit einem Gewinde 14 und einer Auflagefläche 15 angeordnet. Ferner befindet sich im Innenraum 10 ein Stützkörper 38, wobei zwischen diesem und der Auflagefläche 15 ein Spalt 16 vorhanden ist. In diesen Spalt 16 greift ein Schenkel 20 der zweiten Profilschiene 40. Eine Schraube 24 greift durch eine Bohrung der ersten Profilschiene 2 in das Gewinde 14 des Klemmkörpers 12 ein. Durch Festziehen der Schraube 24 ist die zweite Profilschiene 40 mit ihrem Schenkel 20 zwischen Klemmkörper 12 und Stützkörper 38 festgeklemmt. Das Gewinde 14 befindet sich in einem Zapfen 36 des Klemmkörpers 12. Der Klemmkörper 12 ist mit seinem Zapfen 36 in einer Ausnehmung 19 des Stützkörpers eingesetzt. Die Profilschiene 2 ist in einem Rahmenprofil 17 angeordnet. Eine Verstellschraube 46 weist zwei flanschartige Ansätze 47, 49 auf. Die Schraube 46 ist in einen hier nicht weiter dargestellten Schlitz des Rahmenprofils 17 derart eingesetzt, dag die beiden Ansätze 47, 49 eine Arretierung der Schraube in Richtung der Achse 43 ergeben. Die Schraube 46 greift ferner mit ihrem hier nicht weiter dargestellten Gewinde in ein Innengewinde des Stützkörpers 38 ein, so daß durch Verdrehen der Schraube 46 erfindungsgemäß die erste Profilschiene 2 in Richtung des Pfeiles 41 verstellbar ist. Die erste Profilschiene 2 liegt mit ihren Schenkeln 21, 22 zwischen Schenkeln 31, 33 des Rahmenprofils 17, so daß erfindungsgemäß eine gute Führung und stabile Ausrichtung erreicht wird. Der Stützkörper 38 liegt mit einer Seitenfläche 23 an einem mittleren Steg 39 der ersten Profilschiene 2 an. Ein Verdrehen des Stützkörpers 38 und somit auch des Klemmkörper 12 wird zuverlässig unterbunden. Eine Abdeckleiste 45 aus Kunststoff ist im Rahmenprofil 17 im Bereich der Schraube 46 vorgesehen.

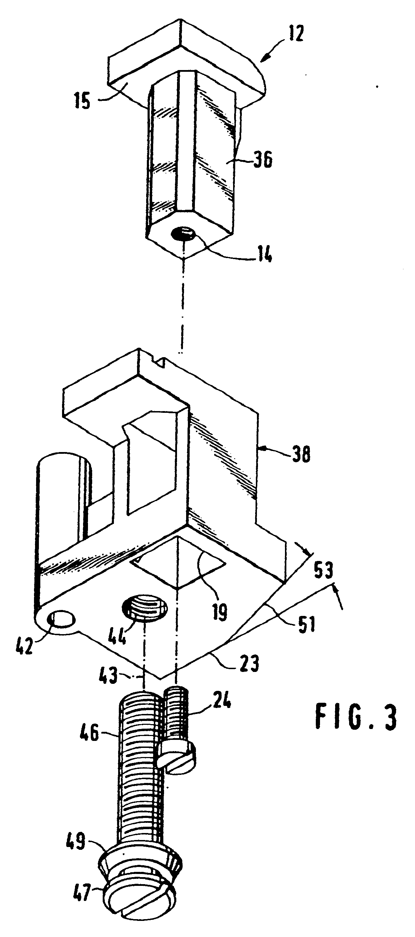

In Fig. 3 ist explosionsartig der Klemmkörper 12 und der Stützkörper 38 zu sehen. Im Stützkörper 38 ist die rechteckförmige Ausnehmung 19 für den Zapfen 36 des Klemmkörpers 12 zu erkennen. Der Schraube 24 ist das Gewinde 14 zugeordnet. Der Stützkörper 38 weist ferner für die Schraube 46 das Innengewinde 44 auf. Von der Schraube 46 sind ferner die beiden Ansätze 47, 49 zu erkennen, mittels welchen eine axiale Fixierung der Schraube im oben genannten Rahmenprofil erreicht wird. Der Stützkörper 38 weist ferner eine unter einem Winkel 49 bezüglich der Seitenfläche 23 angeordnete Querwand 51 auf. Die geneigte Anordnung der Querwand 51 ermöglicht in besonders einfacher Weise das Einsetzen des Stützkörpers 38 in den Innenraum 10. Schließlich weist der Stützkörper 38 noch eine Querbohrung 42 auf. Deren Funktion nachfolgend noch zu erläutern ist.

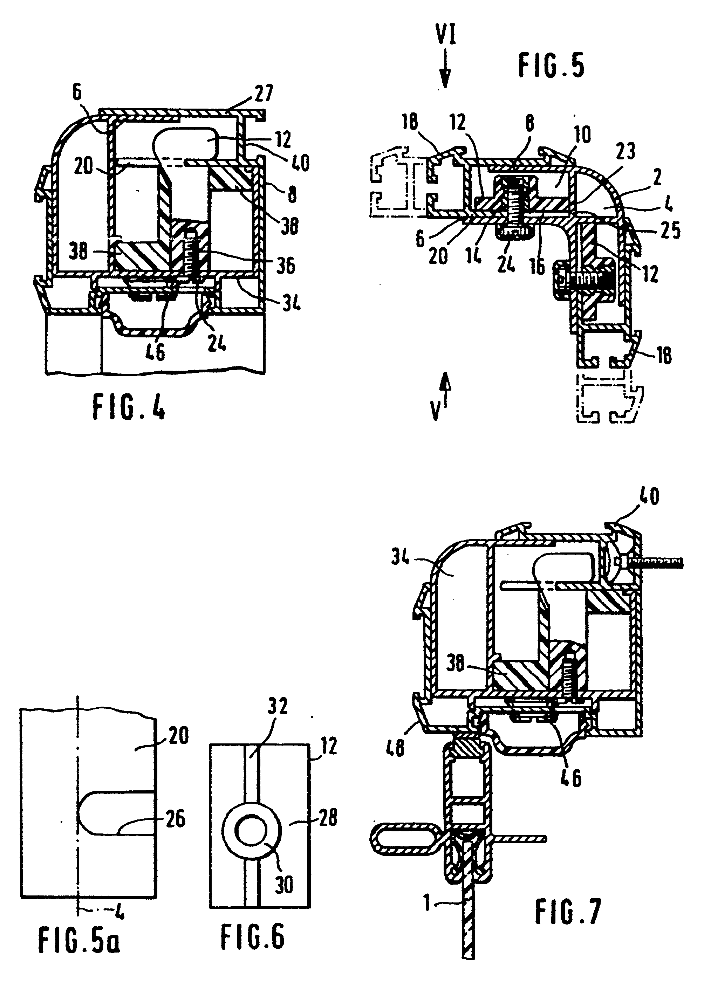

Gemäß Fig. 4 ist im Innenraum 10 der ersten Profilschiene 2 der Klemmkörper 12 angeordnet. Innerhalb der Profilschiene ist der Stützkörper 38 angeordnet, durch welchen der Zapfen 36 durchgreift. Die zweite Profilschiene 40 liegt mit ihren beiden Schenkeln 20, 27 auf den beiden Stegen 6, 8 der ersten Profilschiene 34 auf. Die zweite Profilschiene 40 ist hier etwa U-förmig ausgebildet, wobei der Schenkel 20, der einen Schlitz aufweist, von dem Klemmkörper 12 mittelbar über den Stützkörper 38 auf der ersten Profilschiene 34 abgestützt ist.

Es ist ersichtlich, daß die zweite Profilschiene 40, hier in der Zeichnung nach rechts aus der ersten Profilschiene herausgezogen werden kann, sofern die Schraube 24 gelöst ist. Umgekehrt kann die insoweit vorgefertigte und werkseitig vorbereitete erste Profilschiene während der Montage ohne Schwierigkeiten mit der dann noch einzuschiebenden zweiten Profilschiene 40 fest verbunden werden.

Fig. 5 zeigt die erste Profilschiene 2, die als ein Eckprofil ausgebildet ist und zwei übereinstimmend ausgebildete Seitenteile aufweist. Nachfolgend wird der Einfachheit halber nur der linke Teil erläutert. Die Profilschiene 2 steht mit ihrer Längsachse 4 senkrecht zur Zeichenebene und weist zwei parallele Stege 6, 8 auf. Zwischen diesen Stegen 6, 8 befindet sich ein zur Seite hin offener Innenraum 10, in welchem ein Klemmkörper 12 angeordnet ist. Der Klemmkörper 12 weist im Inneren eine Mutter oder Gewindehülse 14 auf und zu dem Steg 6 ist ein Spalt 16 vorhanden. Es ist eine zweite Profilschiene 18 vorhanden, die ebenfalls zwei Schenkel 20, 27 aufweist. In die Gewindehülse 14 ist eine Schraube 24 geschraubt, die auch durch eine Bohrung des Steges 6 hindurchgreift. Durch Anziehen der Schraube 24 sind der Schenkel 20 und der Steg 6 fest miteinander verspannt und letztendlich die Profilschienen 2 und 18 fest miteinander verbunden. Mit einer Seitenfläche 23 liegt der Klemmkörper 12 erfindungsgemäg an einem Steg 25 der ersten Profilschiene 2 zur Drehsicherung an.

Fig. 5a zeigt eine Ansicht der zweiten Profilschiene 18 in Blickrichtung V gemäß Fig. 5. Es ist hier der Schenkel 20 mit seinem Schlitz 26 zu erkennen, wobei durch diesen Schlitz hindurch die oben genannte Schraube 24 hindurchragt. In Verbindung mit Fig. 5 ist ersichtlich, daß die zweite Profilschiene 18 gegebenenfalls auch in die strichpunktiert angedeutete Position verschoben werden kann und durch Anziehen der Schraube dort bezüglich der ersten Profilschiene 2 arretiert werden kann. Der Schlitz 26 ermöglicht in einfacher Weise eine derartige Verschiebung. Die zweite Profilschiene 18 kann folglich auch ganz aus der ersten Profilschiene herausgezogen werden oder umgekehrt, die zweite Profilschiene wird, insbesondere bei der Montage einer Duschtrennwand, in die mit Klemmkörper und Schraube so weit vorbereitete erste Profilschiene eingeschoben, um nachfolgend durch Anziehen der Schraube 24 fest mit dieser verbunden zu werden.

Fig. 6 zeigt eine Aufsicht in Blickrichtung VI gemäß Fig. 5 auf den Klemmkörper 12. An der Oberfläche 28 befindet sich ein ringförmiger Ansatz 30, in welchem die genannte Gewindehülse 14 mit Innengewinde sich befindet. Es sind ferner Versteifungsrippen 32 zu erkennen, die dem Klemmkörper eine hinreichende Steifigkeit geben, und eine zuverlässige Verbindung zu gewährleisten. Der Klemmkörper 12 besteht bevorzugt aus glasfaserverstärktem Kunststoff oder auch aus einem metallischen Druckgußteil und er weist eine vergleichsweise große Klemmfläche für den eingeklemmten Schenkel auf. Die Versteifungsrippen 32 ergeben eine günstige Druckverteilung. Die Klemmfläche ist vor allem bei vergleichsweise weichen Profilschienen wesentlich, um eine örtliche Überlastung und somit Verformungen der Profilschienen zu unterbinden. Auch bei mehrmaligem Lösen bzw. Anziehen der Schraube wird aufgrund der entsprechend dimensionierten Größe der Auflagefläche eine Beschädigung der Profilschienen zuverlässig vermieden. Darüberhinaus sei hervorgehoben, daß im Rahmen der Erfindung der Schenkel auf der Oberfläche, auf welcher der Klemmkörper aufliegt, Rillen, Nuten oder dergleichen aufweist und/oder dort entsprechend aufgerauht ist. Hierdurch wird in erfindungsgemäßer Weise eine feste Verankerung von Klemmkörper und Profilschiene erreicht. Die genannten Rillen oder dergleichen verlaufen im Rahmen der Erfindung

bevorzugt in Längsrichtung der Profilschiene; sie liegen also quer zur Einschubrichtung der zweiten Profilschiene.

In der Ausführungsform gemäß Fig. 7 ist die zweite Profilschiene 40 als ein Rahmenprofil einer Seitenwand ausgebildet, welche mit der ersten Profilschiene 34 verbunden ist. Die zweite Profilschiene 40 kann, wie durch die strichpunktierten Linien angedeutet, nach rechts verschoben werden und so in die gewünschte Position bezüglich der ersten Profilschiene 34 eingestellt werden. In den Stützkörper 38 ist eine Verstellschraube 46 eingeschraubt, die zur Verbindung eines weiteren Rahmenprofils 48 dient. Das Rahmenprofil ist Bestandteil eines hier nicht weiter dargestellten Rahmens einer Duschtrennwand, deren eine Schiebetür 50 hier angedeutet ist.

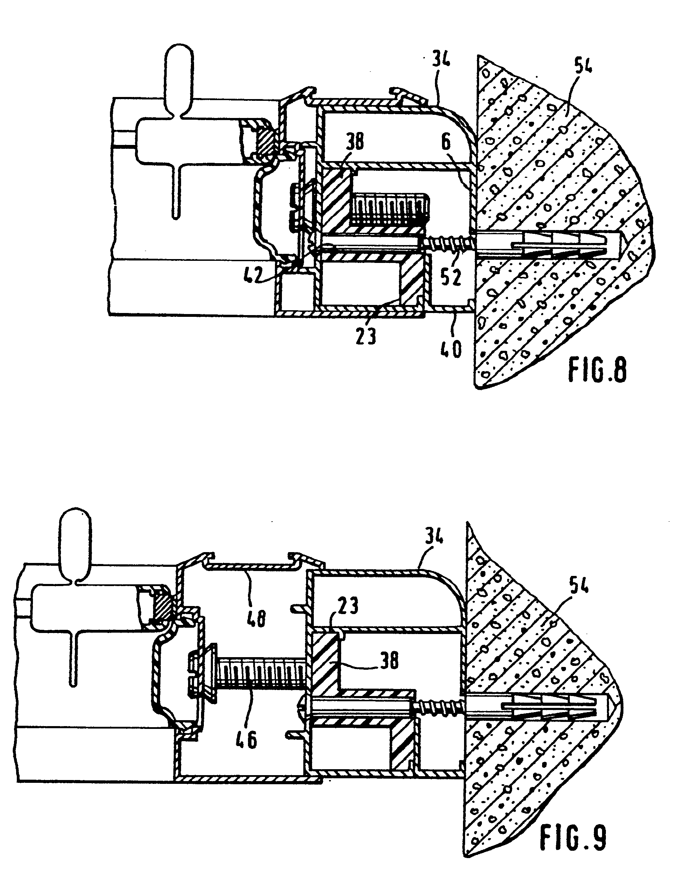

Die Ausführungsform gemäß Fig. 8 entspricht im wesentlichen der anhand von Fig. 5 bereits erläuterten. Die erste Profilschiene 34 ist mittels einer Befestigungsschraube 52 an einer Raumwand 54 angeschraubt. Die Befestigungsschraube 52 durchdringt die oben bereits erwähnte Querbohrung 42 des Stützkörpers 38 und ferner auch eine fluchtende Bohrung der Profilschiene 34. Mittels der L-förmigen zweiten Profilschiene 40 und ferner über den Steg 8 erfolgt die Abstützung der ersten Profilschiene 34 an der Raumwand 54.

Gemäß Fig. 9 ist das Rahmenprofil 48 mittels der Verstellschraube 46 bezüglich der ersten Profilschiene 34 und somit auch bezüglich der Raumwand 54 in einen größeren Abstand eingestellt als bei Fig. 8. Es sei nochmals festgehalten, daß der Stützkörper 38 eine hier nicht weiter dargestellte Bohrung 44 aufweist, in deren Innengewinde die Verstellschraube 46 eingreift. Durch entsprechendes Drehen der Verstellschraube 46 kann der jeweils gewünschte Abstand des Rahmenprofils 48 zur Raumwand 54 vorgegeben werden.

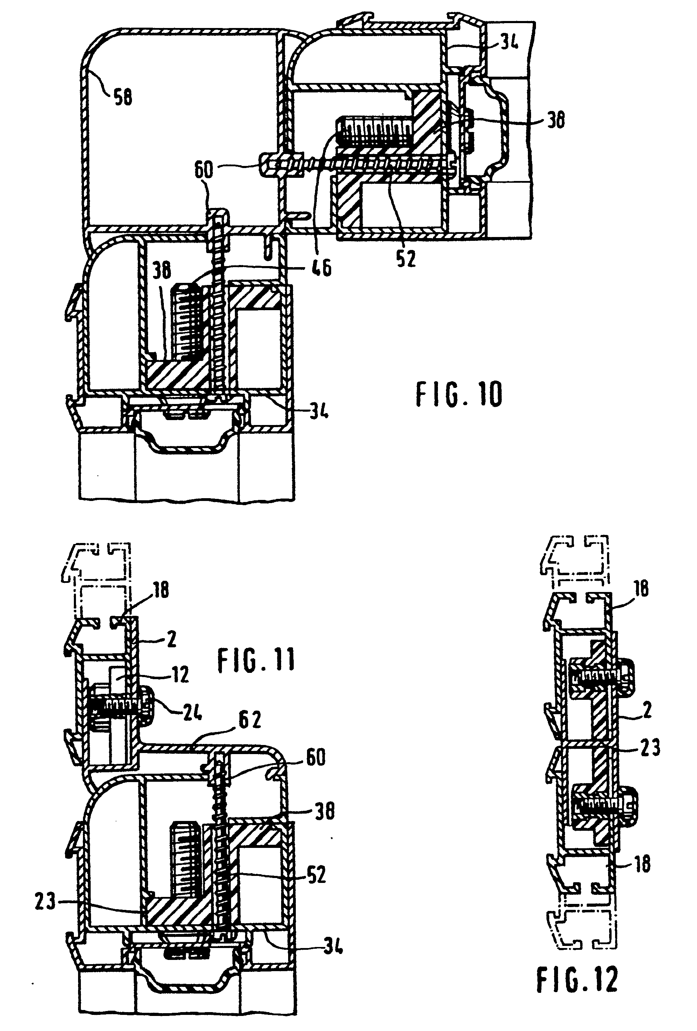

In Fig. 10 ist eine Kombination von 2 Ausführungsformen ähnlich Fig. 5 mit einem gemeinsamen Verbindungsprofil 58 dargestellt. Das Verbindungsprofil 58 weist zwei Schraubkanäle 60 auf, in welchen die Befestigungsschrauben 52 eingreifen, welche durch die jeweiligen Profilschienen 34 sowie deren Stützkörper 38 geführt sind.

Gemäß Fig. 11 ist die eine Ausführungsform der ersten Profilschiene 2 mit der weiteren Ausführungsform der Profilschiene 34 verbunden. Die erste Profilschiene 2 weist hier einen Ansatz 62 mit einem Schraubkanal 60 auf. In diesen Schraubkanal 60 ist die Befestigungsschraube 52 eingeschraubt, welche sowohl den Stützkörper 38 als auch die andere Ausführungsform der Profilschiene 34 durchdringt. Nach Lösen der Schraube 24 kann die zweite Profilschiene 18 in die strichpunktiert angedeutete Position geschoben werden und dort ebenfalls nach Anziehen der Schraube 24 wieder fest mit der ersten Profilschiene 2 verbunden werden.

Die Ausführungsform von Fig. 12 entspricht im wesentlichen der gemäß Fig. 1, wobei hier jedoch die erste Profilschiene 2 als eine ebene Profilschiene ausgebildet ist. Die beiden zweiten Profilschienen 18 können in der bereits erläuterten Weise jeweils in die strichpunktierte Position gebracht und entsprechend mit der ersten Profilschiene 2 verbunden werden.

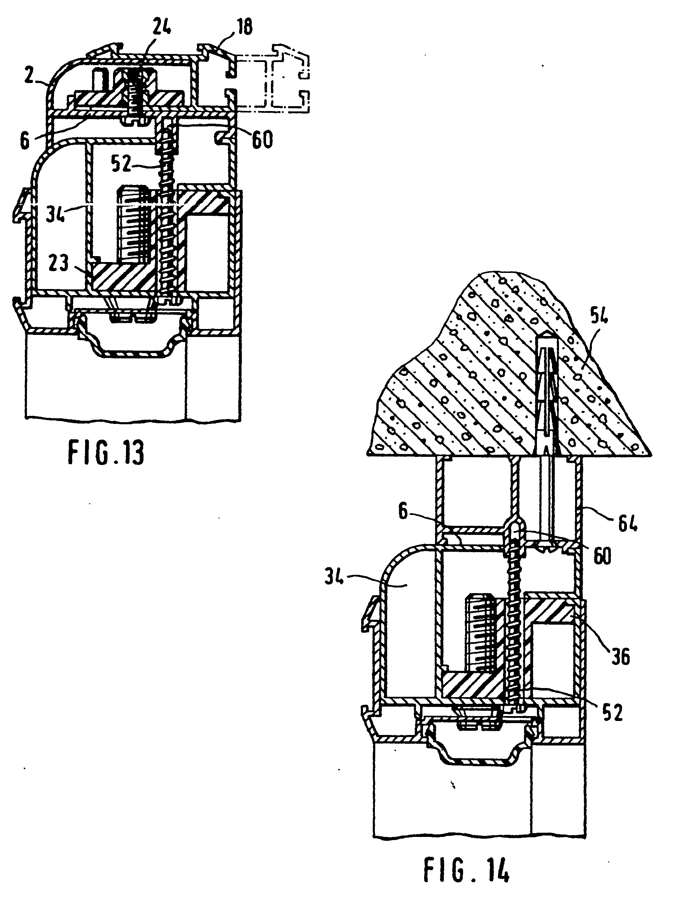

Fig. 13 zeigt eine Ausführungsform, bei welcher die erste Profilschiene 2 mittels der Befestigungsschraube 52 mit der anderen Profilschiene 34 verbunden ist. Die erste Profilschiene 2 weist am Steg 6 den Schraubkanal 60 für die Befestigungsschraube 52 auf. Bei der Montage wird zunächst die zweite Profilschiene 18 in die gewünschte Position gebracht und nachfolgend die Schraube 24 angezogen. Nunmehr wird die andere Profilschiene 34 mittels der Befestigungsschraube 52 an der Profilschiene 2 befestigt.

Gemäß Fig. 14 ist die Profilschiene 34 über ein Verbreiterungsprofil 64 an der Raumwand 54 befestigt. Das Verbreiterungsprofil 64 weist wiederum einen Schraubkanal 60 für die Befestigungsschraube 52 auf, welche sowohl die Profilschiene 34 als auch den Stützkörper 36 durchdringt. Es sei besonders hervorgehoben, daß der Schenkel 8 erfindungsgemäß eine derartige Länge aufweist, daß die Befestigungsschraube 52 ungehindert in den Schraubkanal 60 eingreifen kann. Alternativ könnte im Rahmen der Erfindung auch der Steg 8 hierfür eine entsprechende Ausnehmung aufweisen.

Die obigen Ausführungsformen beziehen sich auf Profilschienen einer Duschtrennwand, ohne daß hierdurch jedoch eine Einschränkung der Erfindung vorgenommen wird. Es sei ausdrücklich hervorgehoben, daß im Rahmen der Erfindung die Profilschienen wenigstens in zwei Bereichen mit Klemmkörper, Schraube und zugeordneten Schlitzen und Bohrungen versehen sind, damit insgesamt eine zuverlässige und funktionsgerechte Verbindung der Profilschienen erreicht wird. Anderenfalls können erfindungsgemäß auch noch weitere Klemmkörper mit Schrauben und so weiter über die Länge der Profilschienen verteilt vorgesehen sein.

**Bezugszeichenliste**

    1, 3, 5 Türelement
    2 erste Profilschiene
    4 Längsachse
    6, 8 Steg
    9 Öffnung
    10 Innenraum
    11 Verblendungsprofil
    12 Klemmkörper
    13 Außenfläche
    14 Gewinde
    15 Auflagefläche von 12
    16 Spalt
    17 Rahmenprofil

18 zweite Profilschiene
19 Ausnehmung von 38
20, 21, 22 Schenkel
23 Seitenfläche
24 Schraube
25 Steg
26 Schlitz
28 Oberfläche von 12
30 Ansatz
31, 33 Schenkel von 17
32 Versteifungsrippe
34 erste Profilschiene
36 Zapfen
38 Stützkörper
39 mittlerer Steg von 2
40 zweite Profilschiene
41 Pfeil
42 Querbohrung
43 Achse
44 Innengewinde
45 Abdeckleiste
46 Verstellschraube
47, 49 Ansatz
48 Rahmenprofil
52 Befestigungsschraube
54 Raumwand
56 Bohrung von 34
58 Verbindungsprofil
60 Schraubkanal
62 Ansatz
64 Verbindungsprofil

## Patentansprüche

1. Anordnung zum Verbinden von zwei Profilschienen (2, 34; 18, 40), insbesondere einer Duschtrennwand, wobei die erste Profilschiene (2, 34) eine sich über die gesamte Länge erstreckende Öffnung (9) sowie einen Innenraum (10) aufweist, mit einem in dem Innenraum (10) angeordneten Klemmkörper (12) und mit einer in ein Gewinde (14) des Klemmkörpers (12) eingreifenden Schraube (24), wobei durch Anziehen der Schraube (24) die zweite Profilschiene (18, 40) bezüglich der ersten Profilschiene (2, 34) festsetzbar ist, dadurch gekennzeichnet, daß der Klemmkörper (12) von der Seite, quer zur Längsrichtung der ersten Profilschiene (2, 34) durch die Öffnung (9) in den Innenraum (10) einsetzbar ist, daß die zweite Profilschiene (18, 40) mit einem Schenkel (20) durch die Öffnung (9) hindurch in den Innenraum (10) eingreift und daß der Sckenkel (20) in einem Spalt (16) eingeklemmt ist, welcher zwischen einer Auflagefläche (15) des Klemmkörpers (12) und einem Steg (8) der ersten Profilschiene und/oder einem Stützkörper (38) vorhanden ist.

2. Anordnung nach Anspruch 1, dadurch gekennzeichnet, dag die zweite Profilschiene (18, 40) mit dem Schenkel (20) von der Seite in die erste Profilschiene (2, 34) einschiebbar ist, wobei die Einschubtiefe vorwählbar ist.

3. Anordnung nach Anspruch 1 oder 2, dadurch gekennzeichnet, daß der Schenkel (20) der zweiten Profilschiene (18, 40) einen zumindest näherungsweise quer zur Längsachse (4) verlaufenden Schlitz (26) aufweist, welcher von der Schraube (24) und/oder dem Klemmkörper (12) durchdrungen wird.

4. Anordnung nach einem der Ansprüche 1 bis 3, dadurch gekennzeichnet, daß der Klemmkörper (12) insbesondere aus einem mit Glasfasern verstärkten Kunststoff besteht, in welchen die Mutter oder die Gewindehülse (14) beim Herstellen, insbesondere nach einem Spritzverfahren eingebettet ist.

5. Anordnung nach einem der Ansprüche 1 bis 3, dadurch gekennzeichnet, daß der Klemmkörper (12) aus einem metallischen Druckgußteil besteht und das Innengewinde enthält.

6. Anordnung nach einem der vorhergehenden Ansprüche, dadurch gekennzeichnet, daß der Klemmkörper (12) im wesentlichen als Platte ausgebildet ist und auf seiner dem Steg (6) der ersten Profilschiene (2, 34) abgewandten Oberfläche (28) einen Ansatz (30) und/oder Versteifungsrippen (32) aufweist.

7. Anordnung nach einem der Ansprüche 1 bis 5, dadurch gekennzeichnet, daß der Klemmkörper (12) einen dem Steg (6) der ersten Profilschiene (2, 34) zugewanten Zapfen (36) aufweist, welcher den Stützkörper (38) durchdringt und das Innengewinde enthält.

8. Anordnung nach einem der vorhergebenden Ansprüche, dadurch gekennzeichnet, daß der Stützkörper (38) eine Querbohrung (42) aufweist, welche mit einer Bohrung des Steges (6) der ersten Profilschiene (2, 34) fluchtet und durch welche eine Befestigungsschraube (52) hindurchführbar ist.

9. Anordnung nach einem der vorhergehenden Ansprüche, dadurch gekennzeichnet, daß der Stützkörper (38) eine Bohrung (44) mit Innengewinde aufweist, in welche eine Verstellschraube (46) für ein Rahmenprofil (17) oder dergleichen eingreift.

10. Anordnung nach einem der vorhergehenden Ansprüche, dadurch gekennzeichnet, daß die beiden Stege (6, 8) der ersten Profilschiene (2, 34) zwischen den Außenflächen bzw. den Innenflächen, an welchen die Schenkel (20, 27) anliegen, einen Abstand aufweisen, welcher im wesentlichen gleich groß ist wie der Abstand der entsprechenden Flächen der anliegenden Schenkel (20, 27) der zweiten Profilschiene (18, 40).

11. Anordnung nach einem der vorhergehenden Ansprüche, dadurch gekennzeichnet, daß der Klemmkörper (12) mit seiner Seitenfläche (23) an der ersten Profilschiene (2, 34) zwecks Drehsicherung anliegt.

## Claims

1. Device for the connection of two profiled rails (2, 34, 18, 40), more particularly of a shower partition, wherein the first profiled rail (2, 34) comprises an opening (9) extending over the entire length and an inner space (10), with a clamping member (12) disposed in the inner space (10), and a screw (24) which engages in a thread (14) of the clamping member (12), it being possible to secure the second profiled rail (18, 40) relative to the first profiled rail (2, 34) by tightening the screw (24), characterised in that the clamping member (12) may be inserted from the side and transverse to the longitudinal direction of the first profiled rail (2, 34) through the opening (9) into the inner space (10), the second profiled rail (18, 40) engages with a leg (20) through the opening (9) into the inner space (10), and the leg (20) is clamped in a slit (16), which is provided between a supporting surface (15) of the clamping member (12) and a crosspiece (8) of the first profiled rail and/or a supporting member (38).

2. Device according to claim 1, characterised in that the second profiled rail (18, 40) may be inserted with the leg (20) from the side into the first profiled rail (2, 34), the depth of insertion being pre-selectable.

3. Device according to claim 1 or 2, characterised in that the leg (20) of the second profiled rail (18, 40) comprises a slot (26) extending at least approximately tranverse to the longitudinal axis (4), which slot is penetrated by the screw (24) and/or the clamping member (12).

4. Device according to any one of claims 1 to 3, characterised in that the clamping member (12) is more particularly made from a glass fibre reinforced plastics material, in which the nut or threaded sleeve (14) is embedded during manufacture, more particularly by means of an injection molding process.

5. Device according to any one of claims 1 to 3, characterised in that the clamping member (12) is made from a metallic die cast part and comprises the inner thread.

6. Device according to any one of the preceding claims, characterised in that the clamping member (12) is essentially formed as a plate and comprises an extension (30) and/or reinforcing ribs (12) on its surface (28) facing away from the crosspiece (6) of the first profiled rail (2, 34).

7. Device according to any one of claims 1 to 5, characterised in that the clamping member (12) comprises a journal (38) facing the crosspiece (6) of the first profiled rail (2, 34), which journal penetrates the supporting member (38) and comprises the inner thread.

8. Device according to any one of the preceding claims, characterised in that the supporting member (38) comprises a transverse bore (42), which is in alignment with a bore of the crosspiece (6) of the first profiled rail (2, 34), and through which a securing screw (52) may be guided.

9. Device according to any one of the preceding claims, characterised in that the supporting member (38) comprises a bore (44) having an inner thread, in which an adjusting screw (46) for a frame profile (17) or the like engages.

10. Device according to any one of the preceding claims, characterised in that the two crosspieces (6, 8) of the first profiled rail (2, 34) comprise a clearance between the outer surfaces or the inner surfaces, on which the legs (20, 27) rest, which clearance is essentially equal to the distance between the corresponding surfaces of the abutting legs (20, 27) of the second profiled rail (18, 40).

11. Device according to any one of the preceding claims, characterised in that the clamping member (12) rest with its lateral surface (23) on the first profiled rail (2, 34) so as to be rotationally rigid.

## Revendications

1. Dispositif pour assembler deux profilés (2, 34; 18, 40), en particulier des profilés pour cloison de douche, dans lequel le premier profilé (2, 34) présente une ouverture (9) s'étendant sur toute sa longueur, ainsi qu'une cavité intérieure (10), un élément de serrage (12) disposé dans la cavité intérieure (10); et une vis (24) qui se visse dans un filetage (14) de l'élément de serrage (12), le deuxième profilé (18, 40) pouvant être bloqué par rapport au premier profilé (2, 34), par serrage de la vis (24), CARACTERISE EN CE QUE l'élément de serrage (12) peut être engagé dans la cavité intérieure (10) à travers l'ouverture (9), par le côté, transversalement à la direction longitudinale du premier profilé (2, 34), le deuxième profilé s'engageant par une aile (20) dans le volume intérieur (10) du premier profilé à travers cette ouverture, et EN CE QUE l'aile (20) est serrée dans une fente (16) qui est présente entre une surface de portée (15) de l'élément de serrage (12) et une nervure (8) du premier profilé et/ou un élément d'appui (38).

2. Dispositif selon la revendication 1, CARACTERISE EN CE QUE le deuxième profilé (18, 40) peut être emboîté dans le premier profilé (2, 34) par le côté, la profondeur d'emboîtement pouvant être présélectionnée.

3. Dispositif selon la revendication 1 ou la revendication 2, CARACTERISE EN CE QUE l'aile (20) du deuxième profilé (18, 40) présente une fente (26) s'étendant au moins approximativement transversalement à l'axe longitudinal (4) et qui est traversée par la vis (24) et/ou par l'élément de serrage.

4. Dispositif selon l'une des revendications 1 à 3, CARACTERISE EN CE QUE l'élément de serrage (12) est en particulier fait d'une matière plastique renforcée de fibre de verre, dans laquelle l'écrou ou la douille filetée (14) est noyé à la fabrication, en particulier par un procédé d'injection.

5. Dispositf selon l'une des revendications 1 à 3, CARACTERISE EN CE QUE 1 élément de serrage (12) est fait d'une pièce métallique coulée sous pression et renferme le filetage intérieur.

6. Dispositif selon l'une des revendications précédentes, CARACTERISE EN CE QUE l'élément de serrage (12) est d'une configuration sensiblement en forme de plaque et présente en outre un bossage (30) et/ou des nervures raidisseuses (32) sur sa surface supérieure (28) qui est à l'opposé de la nervure (6) du profilé (2, 34).

7. Dispositif selon l'une des revendications 1 à 5, CARACTERISE EN CE QUE l'élément de serrage (12) présente un tenon (36), dirigé vers la nervure (6) du profilé (2, 34), qui traverse l'élément d'appui (38) et qui renferme le filetage intérieur.

8. Dispositif selon l'une des revendications précédentes, CARACTERISE EN CE QUE l'élément d'appui (38) présente un perçage transversal (42) qui est aligné sur un perçage de la nervure (6) du premier profilé (2, 34) et à travers lequel on peut enfiler une vis de fixation (52).

9. Dispositif selon l'une des revendications précédentes, CARACTERISE EN CE QUE l'élément d'appui (38) présente un perçage transversal (42) qui est aligné sur un perçage de la nervure (6) du premier profilé (2, 34), dans lequel se visse une vis de réglage (46) prévue pour un profilé de châssis (17) ou équivalent.

10. Dispositif selon l'une des revendications précédentes, CARACTERISE EN CE QUE les deux nervures (6, 8) du premier profilé (2, 34) présentent, entre les surfaces extérieures ou intérieures sur lesquelles les ailes (20, 27) s'appuient, une distance d'écartement qui est sensiblement égale à la distance d'écartement des surfaces correspondantes des ailes (20, 27) du deuxième profilé (18, 40) qui s'y appuient.

11. Dispositif selon l'une des revendications précédentes, CARACTERISE EN CE QUE l'élément de serrage (12) est appuyé contre le premier profilé (2, 34) par sa surface latérale (23) pour le blocage en rotation.

FIG.1

FIG. 2

FIG. 3

FIG.4

FIG.5

FIG.5a

FIG.6

FIG.7

FIG.8

FIG.9

FIG. 10

FIG. 11

FIG. 12

**FIG.13**

**FIG.14**